# EUROPEAN PATENT APPLICATION

(11) **EP 3 660 608 A1**
(43) Date of publication of application: **03.06.2020**
(21) Application number: 18209572.9
(22) Date of filing: 30.11.2018
(51) Int. Cl.: G05B 19/409, G06F 3/01, G06K 9/00, G06T 19/00, G06Q 10/00

(54) **METHOD AND SYSTEM FOR MANAGING AN ASSET IN A TECHNICAL INSTALLATION**

(71) Applicant: Siemens Aktiengesellschaft, 80333 München (DE)
(72) Inventor: RAMAKRISHNARAJA, Prithvi Raj, 500067 Secundrabad, AP (IN)
(74) Representative: Isarpatent

(57) **Abstract**

A method (300) and system (101) for managing an asset in a technical installation (108) are disclosed. In one aspect of the invention, the method includes receiving a request for displaying a digital representation (903) of the at least one asset (110A). The method further includes displaying the digital representation (903) of the at least one asset (110A), wherein the digital representation (903) comprises a plurality of components associated with the asset (110A) and real-time data associated with the components. Additionally, the method includes receiving a first command to display in the digital representation (903) only a first set of the plurality of the components associated with the asset (110A) and processing the received first command. Furthermore, the method includes generating a first modified digital representation, wherein the modified digital representation highlights only the first set of components of the plurality of components associated with the asset (110A) and displaying the first modified digital representation on a display unit of a device (107A-C) associated with a user of the technical installation (108), wherein the first modified digital representation is used for managing the technical installation (108) .

## Description

The present invention relates to a method and system for managing an asset in a technical installation. The method includes receiving a request for displaying a digital representation of the at least one asset, and displaying the digital representation of the at least one asset, wherein the digital representation comprises a plurality of components associated with the asset and real-time data associated with the components.

A technical installation includes several assets which perform various objectives of the technical installation such as product manufacture, batch processing, material handling, power generation etc. Such assets may require periodic maintenance so as to ensure efficient functioning of the technical installation. The technical installation may be a data humongous system, thereby including multiple data variables that are to be monitored periodically. Effective maintenance of technical installations includes monitoring of the working of the technical installation using a simulation model, such as a digital twin. A maintenance procedure may require a service engineer to work on the assets in the technical installation and focus his attention on particular data sets on the asset as well as on the digital twin. However, locating a few data sets every time in the multi-factor digital environment may be difficult, especially if such data sets are located away from each other. Therefore, the maintenance activity may require the service engineer to move to different locations regularly to monitor a plurality of parameter values associated with the asset. This consumes a considerable amount of time and effort, thereby affecting the productivity of the service engineer.

In the light of the above, there exists a need to provide a method and system for managing an asset in the technical installation that is capable of providing information to a user without increasing the cognitive load of such user.

The object of the invention is therefore to provide a method and a system for generating a simulation model of a technical installation which supports human cognition efficiently and accurately.

This object is solved by a method of managing a technical installation, a system, a computer program product and a computer readable medium which generates a modified digital representation of the asset which highlights only one or more components associated with the asset.

In the following, the solution according to the invention is described with respect to the claimed system as well as with respect to the claimed method. Features, advantages or alternative embodiments herein can be assigned to the other claimed objects and vice versa. In other words, claims for the system can be improved with features described or claimed in the context of the method. In this case, the functional features of the method are embodied by objective units of the system.

Based on the abovementioned method, the invention achieves the object of the invention by receiving a first command to display only a first set of the plurality of the components associated with the asset, processing the first command, generating a first modified digital representation, wherein the first modified digital representation highlights only the one or more components of the plurality of components associated with the asset, and displaying the first modified digital representation on a display unit of a device associated with a user of the technical installation. An advantage of the invention is that the method provides quick access to necessary data pertaining to the one or more components associated with the asset in the technical installation. Another advantage of the invention is that the user can concentrate efficiently on a task, thereby amplifying the productivity of the user. This enables an efficient decision making process.

The present invention describes a method of managing at least one asset in a technical installation. The method includes receiving a request for displaying a digital representation of the at least one asset. The digital representation may be, for example, a multi-dimensional model based digital twin of the technical installation. The request for displaying the digital representation may be received, for example, from a user of the technical installation. Such request may be received, for example, from a graphical user interface of a user device associated with the user of the technical installation. Alternatively, the request may also be a voice command provided by the user. The digital representation may be of the complete technical installation or may include a portion of the technical installation. Such portion may include at least one asset in the technical installation. The method further includes displaying the digital representation of the at least one asset. The digital representation may be overlaid on the associated at least one asset in the technical installation. Such digital representation may be an augmented reality based display or a mixed reality based display. Therefore, in a mixed reality based display, the digital representation is overlaid and anchored on the corresponding asset thereby enabling the user to interact with the digital representation. In an embodiment, the digital representation includes a plurality of components associated with the asset and real-time data associated with such components. Such real-time data may be captured, for example, using one or more sensors installed in the technical installation. Therefore, the real-time data may include, for example, one or more parameter values associated with the one or more components in the asset. Such parameter values may include values for parameters such as pressure, temperature, level of fluid, vibration, etc. Therefore, the digital representation may be a multi-dimensional simulation model of the at least one asset in the technical installation.

The method further includes receiving a first command to display in the digital representation only a first set of the plurality of the components associated with the asset. In an embodiment, the user of the technical installation may determine if only one or more of the plurality of the components are to be displayed in the digital representation. Such first set of components associated with the asset may be determined, for example, based on the relevance of such components to the user. The user may choose the one or more components associated with the asset based on a type of maintenance activity required to be performed in the asset. Advantageously, displaying only one or more components of the plurality of the components enables the user to efficiently focus on the problem that requires his attention. The method further includes processing the received first command so as to identify the first set of components indicated by the user of the technical installation. According to an embodiment, the method further includes generating a first modified digital representation. Such first modified digital representation may highlight only the first set of components of the plurality of the components associated with the asset. In an embodiment, the first set of components in the modified digital representation may appear visually enhanced over the plurality of components associated with the asset. The method further includes displaying the first modified digital representation on a display unit of a device associated with the user of the technical installation. Such first modified digital representation may be used in managing the technical installation, such as, but not limited to, performing a maintenance activity for the asset, or for condition monitoring of the asset. Conditioning monitoring may refer to monitoring a parameter associated with one or more components in the asset which may enable prediction of a fault in the technical installation. Advantageously, the generated first modified digital representation enables the user of the technical installation to efficiently focus on the one or more components in the asset. Therefore, the cognitive load on the user is reduced thereby enabling timely completion of tasks.

According to an embodiment, in processing the received first command, the method includes detecting an instance of the first command. The instance of the first command is generated on receipt of the first command from the user of the technical installation. Such instance of the first command may be, for example, an instruction for selection of the first set of components from the plurality of the components in the digital representation. The method further includes identifying from the first command the first set of components to be highlighted in the digital representation. In an embodiment, the first command may be graphical user interface based command. Alternatively, the first command may also be a voice based command. Such first command is analyzed to identify the first set of components from the plurality of components to be highlighted in the digital representation. For example, in a voice based command, natural language of the user of the technical installation may be processed to identify one or more keywords that may correspond to the one or more components associated with the asset. In another embodiment, the first command may be an eye gaze based command. An eye gaze of the user may be monitored and captured to determine if one or more components from the plurality of the components have been chosen. Such eye gaze may be analyzed to determine which of the plurality of the components have been chosen by the user for generation of the modified digital representation of the technical installation. In an embodiment, the chosen one or more components may be identified based on the duration of the user's gaze on such one or more components in the digital representation. Identification of one or more components to be highlighted in the digital representation advantageously enables accurate generation of the modified digital representation based on user inputs.

According to an embodiment of the invention, in generating the first modified representation, the method includes modifying one or more properties of a second set of components from the plurality of components associated with the asset. The second set of components may include one or more components associated with the asset which may not be included in the first set of components. Such one or more properties may be, for example, visualization properties of the digital representation. Such one or more properties may include depth perception, pixel values, etc. Depth perception is a visual ability to perceive an object in multi-dimensional form. The depth perception of the digital representation has to be at an optimum level so as to be clearly visible to the user of the technical installation. In an embodiment, the one or more properties of the second set of components may be the depth perception. Therefore, the depth perception of the second set of components may be decreased with respect to the first set of components from the plurality of components associated with the asset. Such decrease in the depth perception may enable defocusing or blurring the second set of components. Therefore, defocusing or blurring enables obscuring the second set of components in the digital representation. In yet another embodiment, the one or more properties of the second set of components may be pixel value. The pixel value of the second set of components may be, for example, reduced. Therefore, the second set of components may be obscured in the digital representation. Such combination of first set of components in original state and the second set of components in an obscure state form the first modified digital representation. Advantageously, obscuring the second set of components in the digital representation enables the user to focus only on the components of his interest. Therefore, the cognitive load on the user to perceive huge amount of data is reduced. This enables efficient and faster task management.

According to an embodiment, the method further includes receiving a second command to display in the first modified digital representation a third set of components from the plurality of components associated with the at least one asset in the technical installation. Such third set of components may include one or more components associated with the asset which may not be included in the first set of components. In an embodiment, the third set of components may be chosen from the second set of components associated with the asset. Alternatively, the third set of components may also be associated with other assets deployed in the technical installation. The method further includes processing the received second command to identify the third set of components to be displayed in the first modified digital representation. The method includes generating a second modified digital representation, wherein the second modified digital representation highlights only the first set of components and the third set of components of the plurality of components associated with the asset. Therefore, the second modified digital representation displays along with the first set of components, the third set of components associated with at least one asset in the technical installation. The method further includes displaying the second modified digital representation on the display unit of the device associated with the user of the technical installation. Advantageously, one or more components may be added to the generated first modified digital representation based on user interest. Therefore, the need to generate a new digital representation for such addition is eliminated.

According to an embodiment of the invention, the digital representation of the at least one asset is a multi-dimensional model based digital twin of the technical installation. The multi-dimensional model of the technical installation may be, for example, a mixed reality based digital representation. Therefore, the multi-dimensional model is anchored to a specific point, preferably to the asset corresponding to the digital representation. This enables the user to move around the digital representation and analyze the components in the digital representation efficiently. In an embodiment, the multi-dimensional model may be scaled according to the size of the asset corresponding to such digital representation. Therefore, the size of the digital representation can be modified according to the size of the asset. Such scaling enables the digital representation to be overlaid on the corresponding asset.

According to yet another embodiment, the request for displaying the digital representation of the at least one asset is a voice based command. The user of the technical installation may provide a voice based command. Such voice based command may be recognized and processed to identify one or more instructions to display the digital representation of the at least one asset. Such processing of the voice based command may be performed, for example, using natural language processing. In an embodiment, voice based commands of only authorized users may be recognized and processed for displaying the digital representation. The method steps for user identification and authentication based on voice biometrics are well known in the art. Advantageously, voice based command enables hands-free handling of the digital representation. Therefore, such display of the digital representation may also be enabled when the user's hands are occupied in other tasks.

According to another embodiment of the invention, the request for displaying the digital representation is received through a graphical user interface. The user may provide a graphical user interface based command for the display of the digital representation. In an embodiment, a graphical user interface may be provided on the user device which may include one or more options corresponding to the at least one asset in the technical installation. The user may therefore be able to choose at least one asset for which the digital representation is to be displayed.

According to an embodiment of the invention, the first command and the second command is a voice based command. Such processing of the voice based command may be performed, for example, using natural language processing. In an embodiment, voice based commands of only authorized users may be recognized and processed for displaying the digital representation. Advantageously, the user of the technical installation need not use his hands to enable the display of the digital representation of the at least one asset. Therefore, such display of the digital representation may also be enabled when the user's hands are occupied in other tasks.

According to another embodiment, the first command and the second command is an eye gaze based command. The user may choose one or more components to be displayed in the first and/or second modified digital representation using his eye gaze. The eye gaze of the user may be recognized and monitored to identify such one or more components in the digital representation. Such one or more components may be recognized, for example, based on the duration of the eye gaze of the user on such one or more components. In an embodiment, the eye gaze may also include additional gaze based commands such as eye blinks. For example, an eye blink may confirm the choice of the one or more components by the user. In an embodiment, eye gaze of only authorized users may be recognized for identification of the one or more components in the digital representation. Such authorization may be enabled based on retina based biometrics. Advantageously, eye gaze based commands may be used in a noisy environment in the technical installation. Therefore, accurate identification of the one or more components to be displayed in the first and/or second modified digital representation is enabled.

According to yet another embodiment, the first command and the second command is received through a graphical user interface. The user may provide a graphical user interface based command for the display of the first and/or third set of the plurality of the components in the digital representation. In an embodiment, a graphical user interface may be provided on the user device which may include one or more options corresponding to the at least one asset in the technical installation. The user may therefore be able to choose at least one asset for which the digital representation is to be displayed.

According to an embodiment, the method further includes determining at least one component associated with the first set of the plurality of the components chosen to be displayed in the modified digital representation. Such at least one component may be functionally associated with the first set of components chosen to be displayed in the first modified digital representation. In an embodiment, the first set of components may be associated with at least one or more components in the at least one asset. Such associated at least one component may also be a part of another asset in the technical installation. The association between such at least one component and the first set of components may be such that a change introduced in the first of components may introduce a change in the associated at least one component. Therefore, monitoring such associated at least one component may be important while performing any action in/on the first set of components in the at least one asset. The method further includes displaying the at least one component along with the first set of components in the first modified digital representation. Advantageously, the user of the technical installation is made aware of the associated components while performing the maintenance activity on the first set of components in the at least one asset. Therefore, maintenance of the asset is performed efficiently.

According to an embodiment, the method further includes determining at least one component associated with the third set of the plurality of the components chosen to be displayed in the second modified digital representation. Such at least one component may be functionally associated with the third set of components chosen to be displayed in the second modified digital representation. In an embodiment, the third set of components may be associated with at least one or more components in the at least one asset. Such associated at least one component may also be a part of another asset in the technical installation. The association between such at least one component and the third set of components may be such that a change introduced in the third of components may introduce a change in the associated at least one component. Therefore, monitoring such associated at least one component may be important while performing any action in/on the third set of components in the at least one asset. The method further includes displaying the at least one component along with the third set of components in the second modified digital representation. Advantageously, the user of the technical installation is made aware of the associated components while performing the maintenance activity on the third set of components in the at least one asset. Therefore, maintenance of the asset is performed efficiently.

The invention also relates to a system for managing at least one asset in a technical installation. The system comprises one or more processing units. In an embodiment, the system may comprise an interface capable of receiving data from a technical database. The technical database may contain data related to one or more parameters associated with the at least one portion of the technical installation. In an embodiment, the technical database may be present in a cloud environment. The interface may be, for example, data bus which is configured to receive data from the technical database. The system further comprises one or more memory units coupled to the processing units. The one or more memory units include a management module which is configured to perform a method according to claims 1 to 12.

According to an embodiment of the invention, in managing at least one asset in the technical installation, the management module is configured to receive a request for displaying a digital representation of the at least one asset. The digital representation may be, for example, a multi-dimensional model based digital twin of the technical installation. The request for displaying the digital representation may be received, for example, from a user of the technical installation. Such request may be received, for example, from a graphical user interface of a user device associated with the user of the technical installation. Alternatively, the request may also be a voice command provided by the user. The digital representation may be of the complete technical installation or may include a portion of the technical installation. Such portion may include at least one asset in the technical installation. The management module is further configured to display the digital representation of the at least one asset. The digital representation may be overlaid on the associated at least one asset in the technical installation. Such digital representation may be an augmented reality based display or a mixed reality based display. Therefore, in a mixed reality based display, the digital representation is overlaid and anchored on the corresponding asset thereby enabling the user to interact with the digital representation. Such digital representation may be displayed, for example, on the display unit of the user device. In an embodiment, the digital representation includes a plurality of components associated with the asset and real-time data associated with such components. Such real-time data may be captured, for example, using one or more sensors installed in the technical installation. Therefore, the digital representation may be a multi-dimensional simulation model of the at least one asset in the technical installation.

The management module is further configured to receive a first command to display in the digital representation only a first set of the plurality of the components associated with the asset. In an embodiment, the user of the technical installation may determine if only one or more of the plurality of the components are to be displayed in the digital representation. Such one or more components associated with the asset may be determined, for example, based on the relevance of such components to the user. The user may choose the one or more components associated with the asset based on a type of maintenance activity required to be performed in the asset. Such chosen one or more components may form a part of the first set of components of the plurality of components associated with the asset. Advantageously, displaying only the first set of components of the plurality of the components enables the user to efficiently focus on the problem that requires his attention. The management module is further configured to process the received first command so as to identify the first set of components indicated by the user of the technical installation. According to an embodiment, the management module is further configured to generate a first modified digital representation. Such first modified digital representation may highlight only the first set of components of the plurality of the components associated with the asset. In an embodiment, the first set of components in the first modified digital representation may appear visually enhanced over the plurality of components associated with the asset. The management module is further configured to display the first modified digital representation on a display unit of a device associated with the user of the technical installation. Such first modified digital representation may be used in managing the technical installation, such as, but not limited to, performing a maintenance activity for the asset, or for condition monitoring of the asset. Conditioning monitoring may refer to monitoring a parameter associated with one or more components in the asset which may enable prediction of a fault in the technical installation. Advantageously, the generated first modified digital representation enables the user of the technical installation to efficiently focus on the one or more components in the asset. Therefore, the cognitive load on the user is reduced, thereby enabling timely completion of tasks.

According to an embodiment, in processing the received first command, the management module is configured to detect an instance of the first command. The instance of the first command is generated on receipt of the first command from the user of the technical installation. Such instance of the first command may be, for example, an instruction for selection of the first set of components from the plurality of the components in the digital representation. The management module is further configured to identify from the first command one or more components to be highlighted in the digital representation. In an embodiment, the first command may be graphical user interface based command. Alternatively, the first command may also be a voice based command. Such first command is analyzed to identify the one or more components from the plurality of components to be highlighted in the digital representation. For example, in a voice based command, natural language of the user of the technical installation may be processed to identify one or more keywords that may correspond to the one or more components associated with the asset. In another embodiment, the first command may be an eye gaze based command. An eye gaze of the user may be monitored and captured to determine if one or more components from the plurality of the components have been chosen. Such eye gaze may be analyzed to determine which of the plurality of the components have been chosen by the user for generation of the first modified digital representation of the technical installation. In an embodiment, the chosen first set of components may be identified based on the duration of the user's gaze on such first set of components in the digital representation. Identification of one or more components to be highlighted in the digital representation advantageously enables accurate generation of the first modified digital representation based on user inputs.

According to an embodiment of the invention, in generating the first modified representation, the management module is configured to modify one or more properties of a second set of components from the plurality of components associated with the asset. The second set of components may include one or more components associated with the asset which do not form a part of the first set of the plurality of components associated with the asset. Such one or more properties may be, for example, visualization properties of the digital representation. Such one or more properties may include depth perception, pixel values, etc. Depth perception is a visual ability to perceive an object in multi-dimensional form. The depth perception of the digital representation may have to be at an optimum level so as to be clearly visible to the user of the technical installation. In an embodiment, the one or more properties of the second set of components may be the depth perception. Therefore, the depth perception of the second set of components may be decreased with respect to the first set of components from the plurality of components associated with the asset. Such decrease in the depth perception may enable defocusing or blurring the second set of components. Therefore, defocusing or blurring enables obscuring the second set of components in the digital representation. In yet another embodiment, the one or more properties of the second set of components may be pixel value. The pixel value of the second set of components may be, for example, reduced. Therefore, the second set of components may be obscured in the digital representation. Such combination of first set of components in original state and the second set of components in an obscure state form the first modified digital representation. Advantageously, obscuring the second set of components in the digital representation enables the user to focus only on the components of his interest. Therefore, the cognitive load on the user to perceive huge amount of data is reduced. This enables efficient and faster task management.

According to an embodiment, the management module is further configured to receive a second command to display in the first modified digital representation a third set of components from the plurality of components associated with the at least one asset in the technical installation. Such third set of components may include one or more components associated with the asset which may not be included in the first set of components. In an embodiment, the third set of components may be chosen from the second set of components associated with the asset. Alternatively, the third set of components may also be associated with other assets deployed in the technical installation. The management module is further configured to process the received second command to identify the third set of components to be displayed in the first modified digital representation. The management module is further configured to generate a second modified digital representation, wherein the second modified digital representation highlights only the first set of components and the third set of components of the plurality of components associated with the asset. Therefore, the second modified digital representation displays along with the first set of components, the third set of components associated with at least one asset in the technical installation. The management module is further configured to display the second modified digital representation on the display unit of the device associated with the user of the technical installation. Advantageously, one or more components may be added to the generated first modified digital representation based on user interest. Therefore, the need to generate a new digital representation for such addition is eliminated.

According to an embodiment of the invention, the digital representation of the at least one asset is a multi-dimensional model based digital twin of the technical installation. The multi-dimensional model of the technical installation may be, for example, a mixed reality based digital representation. Therefore, the multi-dimensional model is anchored to a specific point, preferably to the asset corresponding to the digital representation. This enables the user to move around the digital representation and analyze the components in the digital representation efficiently. In an embodiment, the multi-dimensional model may be scaled according to the size of the asset corresponding to such digital representation. Therefore, the size of the digital representation can be modified according to the size of the asset. Such scaling enables the digital representation to be overlaid on the corresponding asset.

According to yet another embodiment, the request for displaying the digital representation of the at least one asset is a voice based command. The user of the technical installation may provide a voice based command. Such voice based command may be recognized and processed to identify one or more instructions to display the digital representation of the at least one asset. Such processing of the voice based command may be performed, for example, using natural language processing. In an embodiment, voice based commands of only authorized users may be recognized and processed for displaying the digital representation. The method steps for user identification and authentication based on voice biometrics are well known in the art. Advantageously, the user of the technical installation need not use his hands to enable the display of the digital representation of the at least one asset. Therefore, such display of the digital representation may also be enabled when the user's hands are occupied in other tasks.

According to another embodiment of the invention, the request for displaying the digital representation is received through a graphical user interface. The user may provide a graphical user interface based command for the display of the digital representation. In an embodiment, a graphical user interface may be provided on the user device which may include one or more options corresponding to the at least one asset in the technical installation. The user may therefore be able to choose at least one asset for which the digital representation is to be displayed.

According to an embodiment of the invention, the first command and the second command is a voice based command. Such processing of the voice based command may be performed, for example, using natural language processing. In an embodiment, voice based commands of only authorized users may be recognized and processed for displaying the digital representation. Advantageously, the user of the technical installation need not use his hands to enable the display of the digital representation of the at least one asset. Therefore, such display of the digital representation may also be enabled when the user's hands are occupied in other tasks.

According to another embodiment, the first command and the second command is an eye gaze based command. The user may choose one or more components to be displayed in the first and the second modified digital representation using his eye gaze. The eye gaze of the user may be recognized and monitored to identify such one or more components in the digital representation. Such one or more components may be recognized, for example, based on the duration of the eye gaze of the user on such one or more components. In an embodiment, the eye gaze may also include additional gaze based commands such as eye blinks. For example, an eye blink may confirm the choice of the one or more components by the user. In an embodiment, eye gaze of only authorized users may be recognized for identification of the one or more components in the digital representation. Such authorization may be enabled based on retina based biometrics. Advantageously, eye gaze based commands may be used in a noisy environment in the technical installation. Therefore, accurate identification of the one or more components to be displayed in the first and second modified digital representation is enabled.

According to yet another embodiment, the first command and the second command is received through a graphical user interface. The user may provide a graphical user interface based command for the display of the first set and/or the third set of the plurality of the components in the digital representation. In an embodiment, a graphical user interface may be provided on the user device which may include one or more options corresponding to the at least one asset in the technical installation. The user may therefore be able to choose at least one asset for which the digital representation is to be displayed.

According to an embodiment, the management module is further configured to determine at least one component associated with the first set of the plurality of the components chosen to be displayed in the first modified digital representation. Such at least one component may be functionally associated with the first set of components chosen to be displayed in the first modified digital representation. In an embodiment, the first set of components may be associated with at least one or more components in the at least one asset. Such associated at least one component may also be a part of another asset in the technical installation. The association between such at least one component and the first set of components may be such that a change introduced in the first of components may introduce a change in the associated at least one component. Therefore, monitoring such associated at least one component may be important while performing any action in/on the first set of components in the at least one asset. The management module is further configured to display the at least one component along with the first set of components in the first modified digital representation. Advantageously, the user of the technical installation is made aware of the associated components while performing the maintenance activity on the first set of components in the at least one asset. Therefore, maintenance of the asset is performed efficiently.

According to an embodiment, the management module is further configured to determine at least one component associated with the third set of the plurality of the components chosen to be displayed in the second modified digital representation. Such at least one component may be functionally associated with the third set of components chosen to be displayed in the second modified digital representation. In an embodiment, the third set of components may be associated with at least one or more components in the at least one asset. Such associated at least one component may also be a part of another asset in the technical installation. The association between such at least one component and the third set of components may be such that a change introduced in the third of components may introduce a change in the associated at least one component. Therefore, monitoring such associated at least one component may be important while performing any action in/on the third set of components in the at least one asset. The management module is further configured to display the at least one component along with the third set of components in the second modified digital representation. Advantageously, the user of the technical installation is made aware of the associated components while performing the maintenance activity on the first set of components in the at least one asset. Therefore, maintenance of the asset is performed efficiently.

The invention also relates to a system comprising one or more servers remotely located from a technical installation. The system further comprises one or more sensors communicatively coupled to the one or more servers and one or more user devices communicatively coupled to the one or more servers. The one or more servers comprise computer readable instructions, which when executed by the one or more servers cause the one or more servers to perform the method according to claims 1 to 12.

The invention relates in one aspect to a computer program product comprising a computer program, the computer program being loadable into a storage unit of a system, including machine readable instructions which when executed by a processing unit causes the processing unit to perform a method according to an aspect of the invention.

The invention relates in one aspect to a computer-readable medium, on which program code sections of a computer program are saved, the program code sections being loadable into and/or executable in a system to make the system execute the method according to an aspect of the invention when the program code sections are executed in the system.

The realization of the invention by a computer program product and/or a computer-readable medium has the advantage that already existing management systems can be easily adopted by software updates in order to work as proposed by the invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The present invention is further described hereinafter with reference to illustrated embodiments shown in the accompanying drawings, in which:
- FIG 1: illustrates a block diagram of a client-server architecture which provides geometric modeling of components representing different parts of a real world object, according to an embodiment.
- FIG 2: illustrates a block diagram of a system in which an embodiment of a method of managing a technical installation can be implemented.
- FIG 3: illustrates a flow chart of an embodiment of a method of managing an asset in a technical installation.
- FIG 4: illustrates a flowchart of a method of generating a first modified digital representation of the technical installation, according to an embodiment.
- FIG 5: illustrates a flowchart of a method of identifying associated components with a first set of components of the asset in the technical installation, according to an embodiment.
- FIG 6: illustrates a flowchart of a method of generating a second modified digital representation of the technical installation, according to an embodiment.
- FIG 7: illustrates a flowchart of a method of generating pre-defined templates of the modified digital representation of the technical installation, according to an embodiment.
- FIG 8: illustrates a flowchart of a method of alerting the user of the technical installation of an event, according to an embodiment.
- FIG 9: illustrates an embodiment of a digital representation and a modified digital representation of an asset in the technical installation.
- FIG 10: illustrates an embodiment of graphical user interfaces providing notifications generated on a display unit of a user device.

Hereinafter, embodiments for carrying out the present invention are described in detail. The various embodiments are described with reference to the drawings, wherein like reference numerals are used to refer to like elements throughout.

In the following description, for purpose of explanation, numerous specific details are set forth in order to provide a thorough understanding of one or more embodiments. It may be evident that such embodiments may be practiced without these specific details.

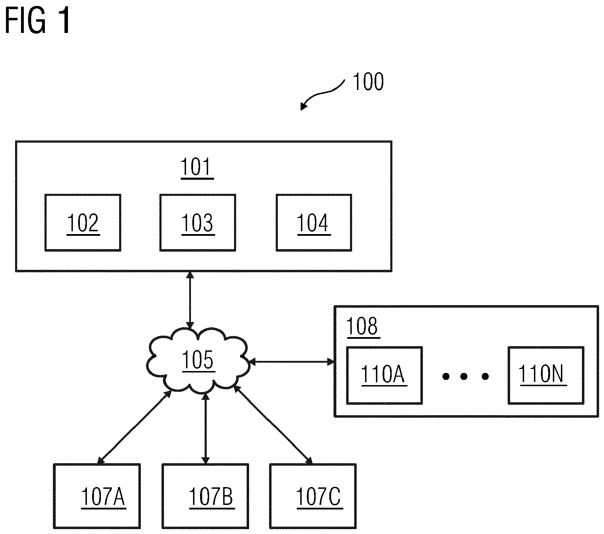

FIG 1 provides an illustration of a block diagram of a client-server architecture 100 that is a geometric modelling of components representing different parts of real-world objects, according to an embodiment. The client-server architecture 100 includes a server 101, one or more client/user devices 107A-C, and a technical installation 108. The client device 107A-C may be, for example, a handheld device, or a wearable device such as a head mounted display. The one or more client devices 107A-C and the technical installation 108 are connected to the server 101 via a network 105, for example, local area network (LAN), wide area network (WAN), WiFi, etc. The technical installation includes one or more assets 110A-N. Such assets contribute to the efficient functioning of the technical installation 108. In one embodiment, the server 101 is deployed in a cloud computing environment. As used herein, "cloud computing environment" refers to a processing environment comprising configurable computing physical and logical resources, for example, networks, servers, storage, applications, services, etc., and data distributed over the network 105, for example, the internet. The cloud computing environment provides on-demand network access to a shared pool of the configurable computing physical and logical resources. The server 101 may include a technical database 102 that comprises sensor data obtained from one or more sensors deployed in the technical installation 108. The technical database 102 may also include event logs of the technical installation 108 and values associated with one or more parameters associated with the functioning of the technical installation 108. The server 101 may further include a management module 103 that is configured to manage at least one asset 110A-N in the technical installation 108. The server 101 may include an interface 104 that receives data, for example, sensor data from one or more sensors and transfers the sensor data to the technical database 102. Additionally, the interface 104 may also communicate with the client devices 107A-C and the technical installation 108 via the network 105.

The client device 107A-C is used by a user to access data associated with the technical installation 108 to manage the technical installation 108. The data on the server 101 can be accessed by the entity via a graphical user interface of an end user web application. Such data includes a multi-dimensional based digital representation of at least one asset 110A-N in the technical installation 108.

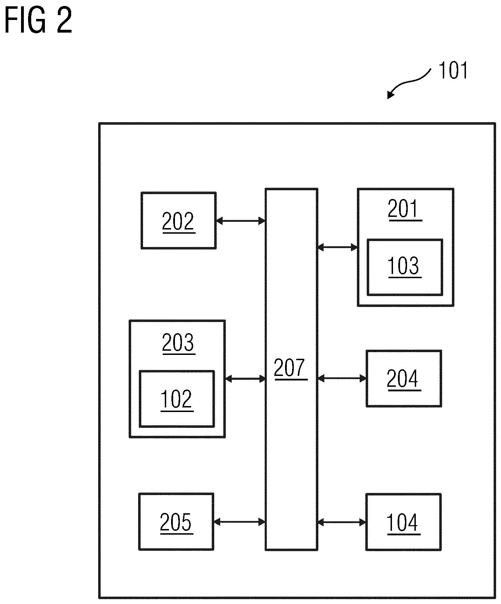

FIG 2 is a block diagram of a system 101 in which an embodiment can be implemented, for example, as a system to manage a technical installation 108, configured to perform the processes as described therein. It is appreciated that the server 101 is an exemplary implementation of the system in FIG 1. In an embodiment, the system 101 may be a maintenance management system for the technical installation 108. In FIG 2, the system 101 comprises a memory 201, a processing unit 202, a storage unit 203, an input unit 204, an output unit 205 a network interface 104 and a standard interface or bus 206. The system 101 can be a (personal) computer, a workstation, a virtual machine running on host hardware, a microcontroller, or an integrated circuit. As an alternative, the system 101 can be a real or a virtual group of computers (the technical term for a real group of computers is "cluster", the technical term for a virtual group of computers is "cloud").

The processing unit 202, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 202 may also include embedded controllers, such as generic or programmable logic devices or arrays, application specific integrated circuits, single-chip computers, and the like. In general, a processing unit 202 can comprise hardware elements and software elements. The processing unit 202 can be configured for multi-threading, i.e. the processing unit 202 can host different calculation processes at the same time, executing the either in parallel or switching between active and passive calculation processes.

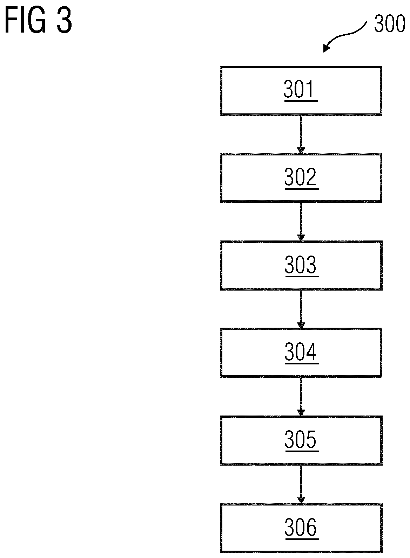

The memory 201 may be volatile memory and non-volatile memory. The memory 201 may be coupled for communication with the processing unit 202. The processing unit 202 may execute instructions and/or code stored in the memory 201. A variety of computer-readable storage media may be stored in and accessed from the memory 201. The memory 201 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 201 includes a management module 103 stored in the form of machine-readable instructions on any of the above-mentioned storage media and may be in communication to and executed by processing unit 202. When executed by the processing unit 202, the management module 103 causes the processing unit 202 to manage an asset 110A-N in the technical installation 108. Method steps executed by the processing unit 202 to achieve the abovementioned functionality are elaborated upon in detail in FIG 3-8.

The storage unit 203 may be a non-transitory storage medium which stores a technical database 102. The technical database 102 is a repository of information related to the technical installation 108. The input unit 204 may include input means such as keypad, touch-sensitive display, camera (such as a camera receiving gesture-based inputs), etc. capable of receiving input signal. The bus 206 acts as interconnect between the processing unit 202, the memory 201, the storage unit 203, the communication interface 104 the input unit 204 and the output unit 205.

Those of ordinary skilled in the art will appreciate that the hardware depicted in FIG 2 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

A system 101 in accordance with an embodiment of the present disclosure includes an operating system employing a graphical user interface. The operating system permits multiple display windows to be presented in the graphical user interface simultaneously with each display window providing an interface to a different application or to a different instance of the same application. A cursor in the graphical user interface may be manipulated by an entity through a pointing device or touch based gestures or hand gestures. The position of the cursor may be changed and/or an event such as clicking a mouse button, generated to actuate a desired response.

One of various commercial operating systems, such as a version of Microsoft Windows™, a product of Microsoft Corporation located in Redmond, Washington may be employed if suitably modified. The operating system is modified or created in accordance with the present disclosure as described.

Disclosed embodiments provide systems and methods for managing an asset in a technical installation. In particular, the systems and methods may perform maintenance of at least a portion of the technical installation.

FIG 3 illustrates a flowchart of a method 300 of managing at least one asset 110A in the technical installation 108. Such technical installation 108 may be remotely located, for example, in an offshore location. The technical installation 108 may be a complex industrial set-up with a plurality of assets 110A-N. Each asset of the plurality of assets 110A-N may function individually but in collaboration with other assets 110A-N so as to ensure efficient functioning of the technical installation 108. Therefore, breakdown of one of the assets 110A-N may lead to breakdown of the entire technical installation 108. Each of the plurality of the assets 110A-N includes a plurality of components essential for the functioning of the assets 110A-N. In managing the asset 110A-N in the technical installation 108, the method 300 includes a step 301 of receiving a request for displaying a digital representation of at least one asset 110A of the technical installation 108. The digital representation of the technical installation 108 is a multi-dimensional model based digital twin of the technical installation 108. The digital twin of the technical installation 108 may be generated by the server 101. In an embodiment, one or more sensors installed in the technical installation 108 are communicatively coupled to the server 101. Such sensors capture and provide real-time data associated with the assets in the technical installation 108. A simulation model may be generated of the technical installation 108 using one or more data associated with the technical installation 108. Such data may correspond to a plurality of parameters required for the functioning of the technical installation 108. Such simulation model is updated periodically using the real-time data obtained from the one or more sensors installed in the technical installation 108, to generate a digital twin of the technical installation 108. The multi-dimensional model based digital twin includes the multi-dimensional data associated with the at least one asset 110AN and the associated components in the asset 110A-N. Such data may be, for example, the structural representation of the asset 110A-N and the associated components in conjunction with real-time data associated with such asset 110A-N and the associated components. Therefore, the multi-dimensional model based digital twin enables monitoring of the real-time condition of the components associated with the assets 110A-N.

In an embodiment, the request for displaying the digital representation of the at least one asset 110A-N is a voice based command. The user of the technical installation 108 may provide a voice based command for displaying the digital representation of the at least one asset 110A. Such voice based command is processed to identify one or more keywords corresponding to the asset 110A whose digital representation is to be displayed. This enables accurate displaying of the digital representation associated with the asset 110A. Alternatively, the request received may also be a graphical user interface based command. In an embodiment, the user of the technical installation 108 may provide a request using the graphical user interface on the user device 107A-C. Such request may be provided by the user using hand gestures if the user device 107A-C used for providing the request is a head mounted device. Alternatively, the request may be provided by the user as a touch based response if the user device 107A-C is a handheld device. In another embodiment, the request may also be provided through input devices like handheld controllers of the head mounted device through movement or through clicks/interactions. The graphical user interface may include data associated with at least one asset 110A-N from which the user may choose the asset 110A for which the digital representation is to be displayed. At step 302, the digital representation of the at least one asset 110A is displayed. The digital representation includes one or more components associated with the displayed asset 110A and one or more real-time data associated with such components. Such real-time data may include details associated with, but not limited to, deviated parameters associated with the components, criticality of the detected event and time of occurrence of an event. Such digital representation may be displayed on the display unit of the user device 107A-C associated with the user of the technical installation 108. The user device 107A-C may be, for example, but not limited to, a handheld device, a head mounted device, etc. In an embodiment, the displayed digital representation may be a mixed reality based representation. Therefore, the digital representation of the asset 110A may be anchored to a specific point, preferably the real-time asset 110A. Such anchoring enables overlaying of the digital representation on the asset 110A. Thus, the user may move around the real-time asset 110A for without moving the digital representation of the asset 110A. This enables the user to interact with other components or assets in the technical installation 108 without being bothered by the digital representation. Alternatively, the digital representation may be turned in different directions and angles by one or more entities using, for example, hand gestures.

In an embodiment, the digital representation of the technical installation 108 may be blown-up to provide a view of one or more components present inside the assets 110A-N in the technical installation 108. The user may enable the blown-up view of the technical installation 108 to obtain a detailed understanding of the components present in the portion of the technical installation 108. In another embodiment, a zoomed view of the technical installation 108 may also be generated. For example, in an embodiment, the user through an input may visualize the zoomed view of the technical installation 108, wherein the asset 110A may be displayed. The user may further zoom in to the asset 110A to visualize specific components within the asset 110A. The zoomed view provides information on linked connections between one or more components in the asset.

At step 303, a first command is received to display in the digital representation only a first set of components of the plurality of components associated with the asset 110A. In an embodiment, the first set of components associated with the asset 110A may be the components that may be relevant to a task being handled by the user of the technical installation 108. As the asset 110A may include a plurality of components, information presented by each of the plurality of the components may be humongous. Such overload of data may increase the cognitive load of the user, thereby affecting the ability of the user to focus on the task at hand. Cognitive load is an effort that is used in a working memory of a user to perform a given task. Displaying only the first set of components of the plurality of components in the asset 110A reduces the effect of data overload on the user. In an embodiment, such first command is received based on an eye gaze of the user. Therefore, if the user places his eye gaze on a particular component in the digital representation of the asset 110A, the component may be chosen in the first set of components of the plurality of components. Such identification of components may depend on the duration of the eye gaze of the user on such components. Alternatively, such first command may be received from the user from a graphical user interface of the user device 107A-C. Such first command may be provided by the user using hand gestures if the user device 107A-C used for providing the request is a head mounted device. Alternatively, the first command may be provided by the user as a touch based response if the user device 107A-C is a handheld device. In another embodiment, the request may also be provided through input devices like handheld controllers of the head mounted device through movement or through clicks/interactions. In yet another embodiment, the first command may be received from a voice based command from the user.

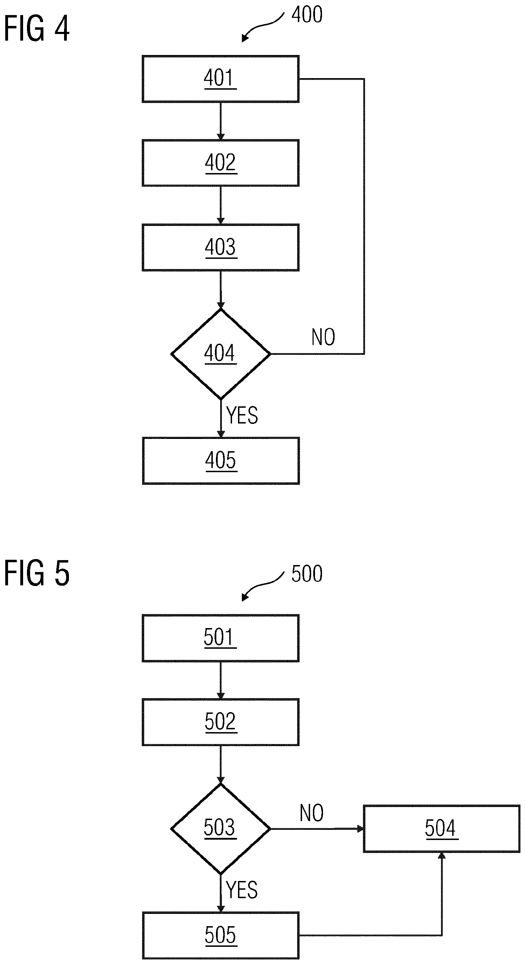

At step 304, the received first command is processed to identify the first set of components chosen by the user. The method steps disclosing the processing of the first command are illustrated in further detail in FIG 4. At step 305 of the method 300, a first modified digital representation is generated. Such first modified digital representation highlights only the first set of components of the plurality of components associated with the asset 110A. In an embodiment, one or more properties associated with a second set of components may be modified. Such second set of components include one or more of the plurality of components that do not form a part of the first set of components. The one or more properties associated with the components are the visualization properties. Such visualization properties may include, but are not limited to, a depth perception of the digital representation and pixel value of the digital representation. Modification of the one or more properties of the second set of the components enables obscuring of the second set of components in the modified digital representation. In an embodiment, the second set of components may be obscured by reducing the depth perception of the second set of components with respect to the optimum depth perception of the digital representation. The digital representation, at an optimum depth perception value, is clearly visible to the user. However, reduction of such depth perception value with respect to the optimum or standard depth perception value may defocus the digital representation, causing the digital representation to appear blurred to human eye. Alternatively, the second set of components of the plurality of the components may be obscured in the digital representation by reducing the pixel value associated with such second set of components. The one or more properties associated with the first set of components of the plurality of the components are unchanged. Therefore, a selective obscuring of one or more components is achieved in the first modified digital representation. Advantageously, the first modified digital representation enables the user of the technical installation 108 to focus on the one or more components of interest without being distracted by other components in the asset 110A. At step 306, the first modified digital representation is displayed on the display unit of the user device 107A-C. Such first modified digital representation is used by the user to manage the asset 110A in the technical installation 108.

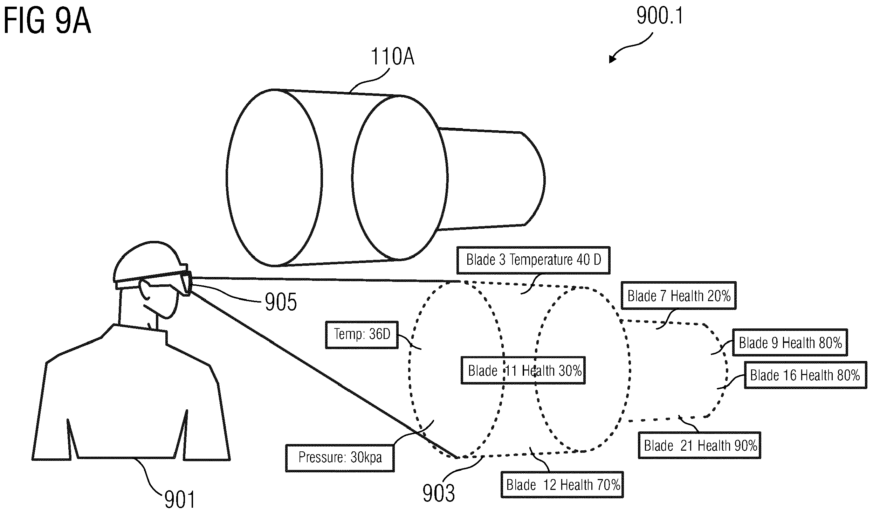

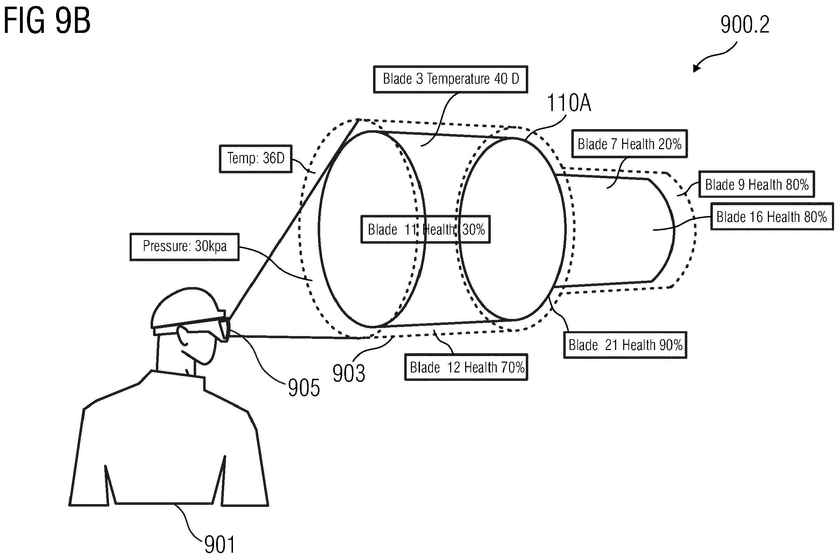

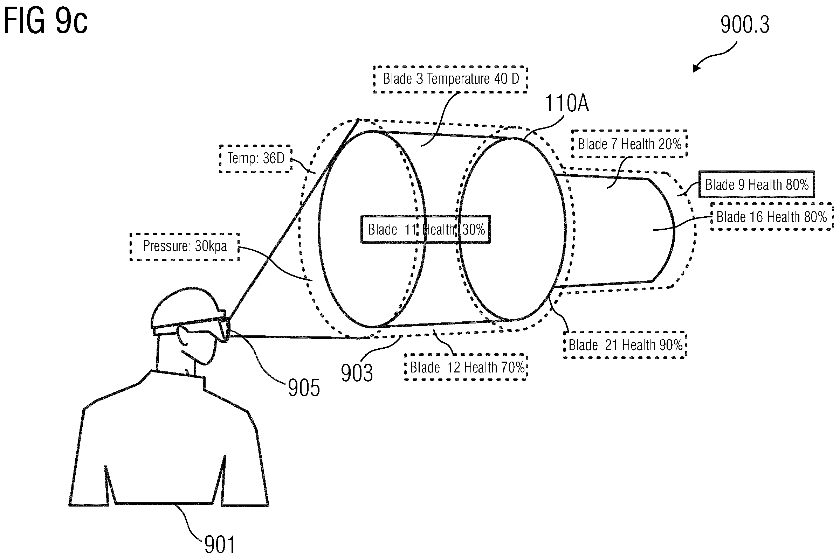

FIG 9 illustrates graphical representations 900.1, 900.2, 900.3 of the digital representation 902 of the asset 110A in the technical installation 108. As depicted in the first arrangement 900.1, the digital representation 903 of the technical installation 108 is rendered as a multi-dimensional mixed reality view. In the present embodiment, such digital representation 903 is rendered using a head mounted device 905. As depicted in arrangement 900.2, the real-world asset 110A is augmented with information related to the asset 110A in the technical installation 108. The digital representation 903 may be overlaid as constructive sensory information such that the user 901 continues to be aware of his real-world environment. The digital representation 903 may be scaled according to the size of the asset 110A. Therefore, accurate overlaying of the digital representation 903 over the asset 110A is achieved. The arrangement 900.3 depicts the modified digital representation, wherein the second set of components are obscured and only the first set of components are highlighted in the digital representation 903.

FIG 4 illustrates a flowchart of a method 400 of processing the first command to generate the first modified digital representation, according to an embodiment. At step 401, an instance of the first command is identified. When the user 901 provides the first command, an instance of such first command may be generated. Such instance of the first command is detected to accurately identify the first set of components that are to be displayed in the digital representation 903. At step 402, the first set of components is identified from the first command. In an embodiment, the first command may be analysed to determine one or more keywords corresponding to the one or more components associated with the asset 110A. If the first command is a voice based command, the command may be processed using natural language processing techniques to determine one or more keywords corresponding to the one or more components associated with the asset 110A. In an embodiment, only one or more voices associated with one or more authorized users 901 may be recognized as the first command. This may be enabled using voice based biometrics of the one or more users 901 of the technical installation 108. Based on the identified keywords, the corresponding one or more components may be automatically chosen as the first set of components to be displayed in the digital representation 903, at step 403. At step 404, a confirmation is made if the identified one or more components in the first set of components are accurate. The confirmation of the identified components enables accurate generation of the first modified digital representation 903. If the identified components are accurate, the first modified digital representation is generated, wherein the first modified digital representation includes highlighted first set of components and obscured second set of components. If the components identified are not accurate, an instance of the first command is identified again.

FIG 5 illustrates a flowchart of a method 500 of identifying associated components with a first set of components of the asset in the technical installation, according to an embodiment. At step 501, the first set of components to be displayed in the digital representation 903 is identified, as described in FIG 4. At step 502, one or more associated components in the asset 110A are identified. Such one or more components may be functionally associated with the first set of components identified to be displayed in the modified digital representation. For example, any modification introduced in one of the first set of components may bring about a change in one or more other components outside the first set of components. Such functionally associated one or more components may be a part of the same asset 110A or may be a part of one or more other assets 110B-N that may be disposed in the technical installation 108. At step 503, a determination is made if such one or more components functionally associated with the first set of components exist. If such one or more components are identified, at step 505, the first modified digital representation may include data associated with such one or more components. Such one or more components may be displayed in the digital representation, for example, with a different colour, or as a representative icon, or as a hologram in motion. A hologram in motion may depict the hologram with a pulsating motion, thereby drawing the attention of the user 901 to such one or more associated components. If no functionally associated components are identified, at step 504, the digital representation highlighting only the first set of components and obscuring the second set of components is generated. Advantageously, the user is alerted of the functionally associated one or more components in the technical installation 108 such that efficient management of the technical installation 108 is achieved.

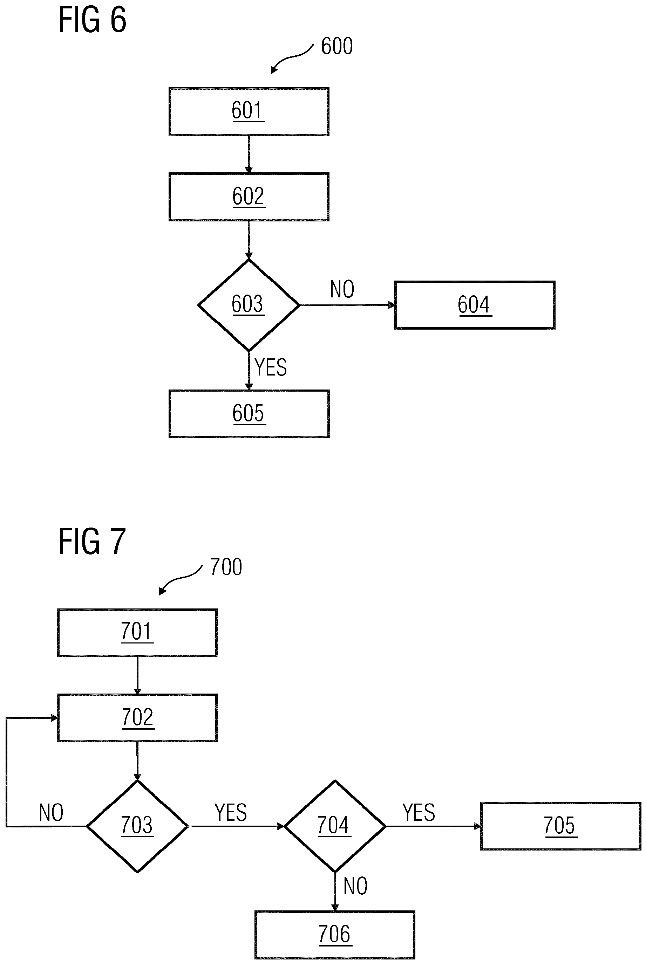

FIG 6 illustrates a flowchart of a method 600 of generating a second modified digital representation, according to an embodiment. At step 601, a second command is received from the user 901 of the technical installation 108. The second command may be to display in the first modified digital representation a third set of plurality of components associated with the at least one asset in the technical installation 108. The third set of plurality of components may include one or components associated with the asset 110A which are not a part of the first set of components. In an embodiment, the third set of components may also be associated with another asset 110B-N that may be disposed in the technical installation 108. At step 602, the second command is processed to identify one or more components of the one or more assets 110A-N which are to be included in the first modified digital representation. At step 603, a determination is made if such third set of components are identified. If the third set of components is identified, at step 605, a second modified digital representation is generated which displays the first set of components and the third set of components. Such second modified digital representation may obscure the second set of components associated with the asset 110A. If the third set of components is not identified, the first modified digital representation is displayed to the user, at step 604. Advantageously, new components to be displayed in the digital representation may be added dynamically to the first modified digital representation 901. Therefore, the user 901 may continue with the ongoing task of management of the technical installation 108 using the digital representation and include additional components of the technical installation 108 in such digital representation. Therefore, holistic management of the technical installation 108 is enabled.

FIG 7 illustrates a flowchart of a method 700 of generating pre-defined templates of the modified digital representation of the technical installation 108, according to an embodiment. At step 701, the digital representation 903 of the technical installation 108 is generated. Such digital representation 903 may be the first modified digital representation or the second modified digital representation of the asset 110A. At step 702, the generated digital representation is displayed in the display unit of the user device 905. At step 703, a determination is made if the task associated with the digital representation 903 is completed. If the task is completed, a check is performed at step 704 to determine if the generated first or second modified digital representation 903 is to be stored. If yes, such digital representation is stored as a template. Such template may be used in future for management of similar tasks in the technical installation 108. If the digital representation 903 is not to be stored, at step 706, such digital representation is discarded. Such templates of the digital representation and the modified representation may be stored in the technical database 102. In an embodiment, the digital representations may be shared with multiple users over a network. This enables multiple users to evaluate the task or issue and identify a collaborative resolution to such issue. Sharing of the digital representation may also enable multiple users to monitor the progress of the task assigned to the user 901.

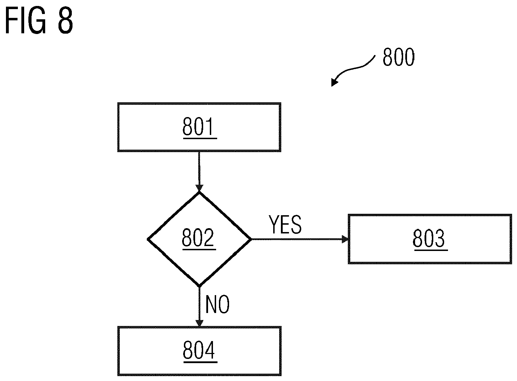

FIG 8 illustrates a flowchart of a method 800 of alerting the user of the technical installation of an event, according to an embodiment. At step 801, the real-time data associated with the one or more components in the assets 110A-N is monitored. Such real-time data may be obtained periodically from the one or more sensors installed in the technical installation 108. At step 802, a check is made to determine if an alert is to be generated for the user 901. An alert may be required to be generated if a deviation is determined in the real-time data with respect to a standard. If no deviation between the real-time data and the standard is identified, no alert is generated at step 804. If a deviation is identified, at step 803, an alert may be generated. Such alert may be displayed on the display unit of the user device 107A-C as a notification. The notification may be displayed in the peripheral area of the display unit of the user device 107A-C such that the notification appears in the peripheral vision of the user 901. In another embodiment, the notification may appear around the one or more real-time parameters displayed in the digital representation. Such notification may appear, for example, if there is a significant change in the parameter value with respect to a standard threshold. For example, the visual properties of the displayed parameter value may be modified so as to introduce a change in size of the displayed parameter value or change in color associated with the displayed parameter value. The area occupied by the notification in the display unit of the user device 107A-C may be increased or decreased depending upon the criticality of the information to be conveyed. In an embodiment, the notification may be indicated on the display unit using a different color to draw the attention of the user 901. In another embodiment, the notification may be generated in conjunction with a sound. In yet another embodiment, the alert may also include a pulse vibration in the user device 107A-C, such that the user device 107A-C vibrates in pulses when an alert is generated.

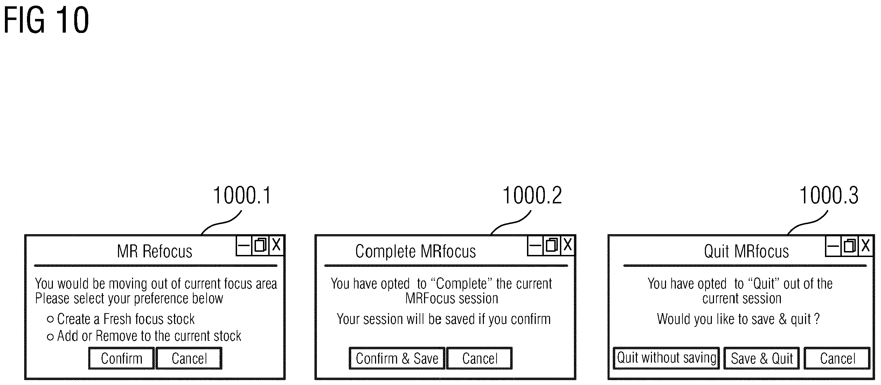

FIG 10 illustrates an embodiment of graphical user interfaces providing notifications generated on a display unit of a user device 107A-C. The graphical user interface 1001.1 represents an embodiment of a notification generated on the display unit of the user device 107A-C when the second command is received from the user 901 to modify one or more components in the first modified digital representation. Such modification may include addition or removal of one or more components in the first modified digital representation. The graphical user interface 1001.1 also includes radio buttons against the options for responses, which may be clicked using a mouse button to choose the preferred response to the question. The graphical user interface 1001.2 represents an embodiment of a notification generated on the display unit of the user device 107A-C when completion of the task associated with the digital representation is identified. The graphical user interface 1001.2 provides an option to the user 901 to store the generated digital representation as a template for future use. The graphical user interface 1001.3 represents an embodiment of a notification generated on the display unit of the user device 107A-C when a command from the user 901 to quit the digital representation is identified. In an embodiment, the user 901 may quit the digital representation without completion of the assigned task. The notification 1001.3 enables the user to store or discard the generated digital representation.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope and spirit of the invention in its aspects.

### List of reference numbers

100 Client server architecture
101 System/ server
102 Technical database
103 Management module
104 Network interface
105 Network
107A-C Client device/User device
108 Technical Installation
110A-N Assets
201 Memory
202 Processing unit
203 Storage unit
204 Input unit
205 Output unit
207 Bus
300 Method of managing an asset in a technical installation
400 Method of generating a first modified digital representation of the technical installation
500 Method of identifying associated components with a first set of components of the asset in the technical installation
600 Method of generating a second modified digital representation of the technical installation
700 Method of generating pre-defined templates of the modified digital representation of the technical installation
800 Method of alerting the user of the technical installation of an event
900.1 Embodiment of a digital representation and a modified digital representation of an asset in the technical installation
900.2 Embodiment of a digital representation and a modified digital representation of an asset in the technical installation
900.3 Embodiment of a digital representation and a modified digital representation of an asset in the technical installation
901 User
903 Digital represnetation/modified digital representation
905 Head mounted device
1000.1 Graphical user interfaces providing notifications generated on a display unit of a user device
1000.2 Graphical user interfaces providing notifications generated on a display unit of a user device
1000.3 Graphical user interfaces providing notifications generated on a display unit of a user device

## Claims

1. A method of managing at least one asset (110A-N) in a technical installation (108), the method comprising:
receiving a request for displaying a digital representation (903) of the at least one asset (110A);
displaying the digital representation (903) of the at least one asset (110A), wherein the digital representation (903) comprises a plurality of components associated with the asset (110A) and real-time data associated with the components;
receiving a first command to display in the digital representation (903) only a first set of the plurality of the components associated with the asset (110A);
processing the received first command;
generating a first modified digital representation, wherein the first modified digital representation highlights only the first set of components of the plurality of components associated with the asset (110A); and
displaying the first modified digital representation on a display unit of a device (107A-C) associated with a user of the technical installation (108), wherein the first modified digital representation is used for managing the technical installation (108).

2. The method according to claim 1, wherein in processing the received first command, the method comprises:
detecting an instance of the first command; and
identifying from the first command, the first set of components to be highlighted in the first modified digital representation.

3. The method according to claim 1, wherein in generating the first modified digital representation, the method comprises:
modifying one or more properties of a second set of the plurality of components associated with the asset (110A); and
retaining one or more properties of the first set of components identified from the plurality of the components, from the first command.

4. The method according to any of the aforementioned claims, further comprising:
receiving a second command to display in the first modified digital representation a third set of components from the plurality of components associated with the at least one asset (110A) in the technical installation (108);
processing the received second command;
generating a second modified digital representation, wherein the second modified digital representation highlights only the first set of components and the third set of components of the plurality of components associated with the asset (110A); and
displaying the second modified digital representation on the display unit of the device (107A-C) associated with the user of the technical installation (108).

5. The method according to claims 1 to 4, wherein the digital representation of the at least one asset (110A) is a multi-dimensional model based digital twin of the technical installation (108).

6. The method according to claim 1, wherein the request for displaying the digital representation (903) of the at least one asset (110A) is a voice based command.

7. The method according to claim 1, wherein the request for displaying the digital representation (903) is received through a graphical user interface on the user device (107A-C) .

8. The method according to claim 1 and 4, wherein the first command and the second command is a voice based command.

9. The method according to claim 1 and 4, wherein the first command and the second command is an eye gaze based command.

10. The method according to claim 1 and 4, wherein the first command and the second command is received through a graphical user interface on the user device (107A-C).

11. The method according to any of the aforementioned claims, further comprising:
determining at least one component associated with the first set of the plurality of the components chosen to be displayed in the modified digital representation, wherein the at least one component is functionally associated with the first set components chosen to be displayed in the first modified digital representation; and
displaying the at least one component along with the first set components chosen to be displayed in the first modified digital representation.

12. The method according to claims 1 and 4, further comprising:
determining at least one component associated with the third set of the plurality of the components chosen to be displayed in the second modified digital representation, wherein the at least one component is functionally associated with the third set components chosen to be displayed in the modified digital representation; and
displaying the at least one component along with the third set components chosen to be displayed in the second modified digital representation.

13. A system (101) for managing at least one asset in a technical installation (108), the system (101) comprising:
one or more processing units (202); and
one or more memory units (201) coupled to the one or more processing units (202), wherein the one or more memory units (201) comprises a management module (103) configured for performing the method according to any of the claims 1 to 12.

14. A system comprising:
one or more servers remotely located from a technical installation (108);
one or more sensors communicatively coupled to the one or more servers; and
one or more user devices (107A-C) communicatively coupled to the one or more servers, wherein the one or more servers comprise computer readable instructions, which when executed by the one or more servers cause the one or more servers to perform the method according to claims 1 to 12.

15. A computer program product comprising machine readable instructions, that when executed by a processing unit (202), cause the processing unit (202) to perform a method according to claims 1-12.

16. A computer-readable medium, on which program code sections of a computer program are saved, the program code sections being loadable into and/or executable by a processing unit to make a system execute the method of any one of the claims 1 to 12 when the program code sections are executed in the system.
